# EUROPEAN PATENT SPECIFICATION

(11) **EP 4 303 768 B1**
(45) Date of publication and mention of the grant of the patent: **04.11.2026**
(21) Application number: 23167984.6
(22) Date of filing: 14.04.2023
(51) Int. Cl.: G06N 3/045, G06N 3/0495, G06N 3/063, G06N 3/082, G06N 3/096, G06V 10/82, G06V 20/10, G06N 3/0464, G06N 3/048, G06N 3/084, G06N 3/09

(54) **METHOD AND APPARATUS FOR MULTI-TASK PROCESSING**
VERFAHREN UND VORRICHTUNG ZUR MULTITASKVERARBEITUNG
PROCÉDÉ ET APPAREIL DE TRAITEMENT MULTITÂCHE

(30) Priority: 07.07.2022 KR 20220083717; 31.08.2022 KR 20220110186
(43) Date of publication of application: 10.01.2024
(73) Proprietor: Samsung Electronics Co., Ltd., Suwon-si, Gyeonggi-do 16677 (KR); Korea Advanced Institute of Science and Technology, Daejeon 34141 (KR)
(72) Inventor: Jang, Jun-Woo, 16678 Suwon-si, Gyeonggi-do (KR); Shin, Jaekang, 34141 Daejeon (KR); Kim, Lee-Sup, 34141 Daejeon (KR)
(74) Representative: Grünecker Patent- und Rechtsanwälte PartG mbB

(56) References cited:
- KAWAKAMI REI ET AL: "Cross-Connected Networks for Multi-Task Learning of Detection and Segmentation", 2019 IEEE INTERNATIONAL CONFERENCE ON IMAGE PROCESSING (ICIP), IEEE, 22 September 2019 (2019-09-22), pages 3636 - 3640, XP033647593, DOI: 10.1109/ICIP.2019.8803687
- RHU MINSOO ET AL: "Compressing DMA Engine: Leveraging Activation Sparsity for Training Deep Neural Networks", 2018 IEEE INTERNATIONAL SYMPOSIUM ON HIGH PERFORMANCE COMPUTER ARCHITECTURE (HPCA), IEEE, 24 February 2018 (2018-02-24), pages 78 - 91, XP033341940, DOI: 10.1109/HPCA.2018.00017
- DEMI GUO ET AL: "Parameter-Efficient Transfer Learning with Diff Pruning", ARXIV.ORG, CORNELL UNIVERSITY LIBRARY, 201 OLIN LIBRARY CORNELL UNIVERSITY ITHACA, NY 14853, 14 December 2020 (2020-12-14), XP081837610
- SHIN JAEKANG JKSHIN94@KAIST AC KR ET AL: "Algorithm/architecture co-design for energy-efficient acceleration of multi-task DNN", PROCEEDINGS OF THE 59TH ACM/IEEE DESIGN AUTOMATION CONFERENCE, ACMPUB27, NEW YORK, NY, USA, 10 July 2022 (2022-07-10), pages 253 - 258, XP058889090, ISBN: 978-1-4503-9739-1, DOI: 10.1145/3489517.3530455

## Description

### BACKGROUND

### 1. Field

The present disclosure relates to a multi-task processing method and apparatus, and more particularly, to a multi-task processing technology for processing multiple related tasks with limited hardware resources.

### 2. Description of Related Art

The development of deep neural networks (DNNs) has enabled various computer vision (CV) applications. Furthermore, transfer learning has been used to create DNNs exhibiting desirable performance characteristics in various CV tasks. For example, pre-training a model on a large dataset and fine-tuning it for a target task may allow the model to achieve desirable performance in the target task without over-fitting (i.e., without losing performance on related tasks).

Recently, DNNs have been used for artificial intelligence (Al) applications such as augmented reality (AR) and autonomous driving. In some cases, these applications simultaneously perform multiple related tasks using a single input. The tasks may include object classification, depth estimation, surface normal estimation, and the like. However, performing multiple tasks can be computationally intensive, which can limit applicability on edge devices. Accordingly, there is a need in the art to develop technology for simultaneously processing multiple related CV tasks using limited hardware resources.
Kawakami Rei et al.: "Cross-Connected Networks for Multi-Task Learning of Detection and Segmentation",22 September 2019, discloses a multitask CNN consisting of two interconnected single-task CNNs.

### SUMMARY

The invention is defined in claim 1. Preferred embodiments are subject matter of the dependent claims.

Aspects of the present disclosure provide a multi-task processing technology for efficiently processing a plurality of computer vision (CV) tasks. Embodiments of the disclosure may be implemented in a mobile or edge terminal having limited hardware resources.

### BRIEF DESCRIPTION OF THE DRAWINGS

FIG. 1 illustrates a flowchart of a multi-task processing method.
FIG. 2 illustrates an example of a task-specific model for multi-task processing.
FIG. 3 illustrates an example of a multi-task processing method.
FIG. 4 illustrates an example of a data weight squeeze (DWS) algorithm.
FIG. 5 illustrates examples of activation maps generated in task-specific models.
FIG. 6 illustrates an example of a multi-task processing method.
FIG. 7 illustrates an example of an apparatus.
FIG. 8 illustrates an example of a hardware architecture of an apparatus performing a multi-task processing method.
FIG. 9 illustrates an example of a data flow in layer operations.
FIG. 10 illustrates a computer vision system.
FIG. 11 illustrates an application of a computer vision system.

Throughout the drawings and the description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The present disclosure relates to machine learning, and more specifically to compression a neural network. Embodiments of the disclosure provide a method of compressing an intermediate activation map when processing multiple computer vision (CV) tasks using a deep neural network (DNN).

DNNs have been used for CV applications such as augmented reality (AR) and autonomous driving. In some cases, these applications simultaneously perform multiple related tasks using a single input. The tasks may include object classification, depth estimation, surface normal estimation, and the like. Conventional machine learning models use different models for each task, and process the input independently with each model. Thus, performing multiple tasks using conventional machine learning models can be computationally intensive, which can limit applicability on edge devices.

Accordingly, embodiments of the present disclosure provide an improvement to conventional CV models by processing input for multiple tasks using some shared computational elements. An embodiment divides intermediate activation values into a base activation and a delta activation. The values are compressed using a sparsity-based compression method, and subsequently restored when performing an operation on the compressed map. Accordingly, embodiments of the present disclosure can perform multiple CV tasks using reduced computation, which enables more complex multi-task applications to be performed on edge devices.

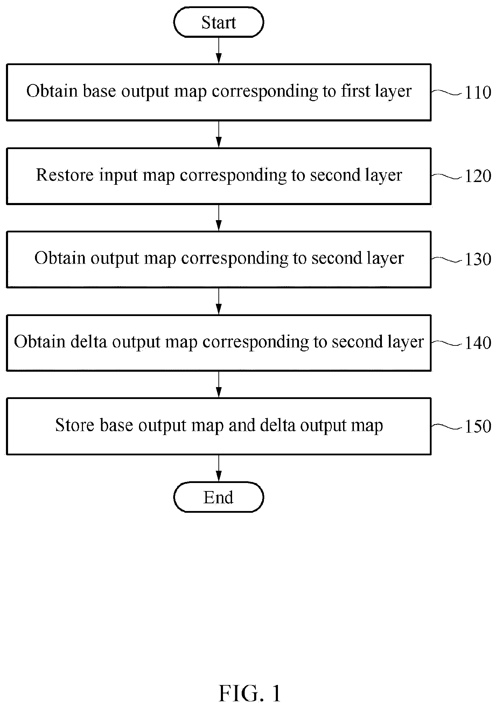

FIG. 1 illustrates a flowchart of a multi-task processing method. In some examples, the method described by FIG. 1 can be implemented by a neural network operating on a device with limited hardware resources. For example, the method can be performed by a computer performing self-driving or safety related driving tasks in a vehicle.

The device may collect input including an image or other sensory data, and provide the input to a machine learning model such as a neural network. The machine learning model process the input, and provides multiple outputs corresponding to different CV tasks such as object detection and depth estimation. These outputs may then be used to perform self-driving tasks or other tasks related to assisting the user (e.g., the driver).

Referring to FIG. 1, a multi-task processing method according to an example embodiment may include operation 110 of obtaining a base output map corresponding to a first layer, operation 120 of restoring an input map corresponding to a second layer, operation 130 of obtaining an output map corresponding to the second layer, operation 140 of obtaining a delta output map corresponding to the second layer, and operation 150 of storing the base output map and the delta output map.

The multi-task processing method may be performed by at least one processor. An example configuration of hardware performing the multi-task processing method are described herein.

The multi-task processing method may be performed by the processor based on one or more artificial neural networks (ANNs) including a first neural network and a second neural network to which the same input data is applied. An ANN is a hardware or a software component that includes a number of connected nodes (i.e., artificial neurons), which loosely correspond to the neurons in a human brain. Each connection, or edge, transmits a signal from one node to another (like the physical synapses in a brain). When a node receives a signal, it processes the signal and then transmits the processed signal to other connected nodes. In some cases, the signals between nodes comprise real numbers, and the output of each node is computed by a function of the sum of its inputs. In some examples, nodes may determine their output using other mathematical algorithms (e.g., selecting the max from the inputs as the output) or any other suitable algorithm for activating the node. Each node and edge is associated with one or more node weights that determine how the signal is processed and transmitted.

During the training process, these weights are adjusted to improve the accuracy of the result (i.e., by minimizing a loss function which corresponds in some way to the difference between the current result and the target result). The weight of an edge increases or decreases the strength of the signal transmitted between nodes. **In** some cases, nodes have a threshold below which a signal is not transmitted at all. **In** some examples, the nodes are aggregated into layers. Different layers perform different transformations on their inputs. The initial layer is known as the input layer and the last layer is known as the output layer. **In** some cases, signals traverse certain layers multiple times.

**In** some cases, the training is performed in a two-phase process including a first training phase (i.e., the pre-training phase) that is based on or useful for multiple tasks, and a second training phase (i.e., the fine-tuning phase) that is specific to an individual task.

Accordingly, the first neural network may include a neural network obtained through fine-tuning of a weight of at least one layer included in a pretrained base model based on transfer learning for a first task. The second neural network may include a neural network obtained through fine-tuning of a weight of at least one layer included in the base model based on transfer learning for a second task. For example, the first neural network and the second neural network may correspond to task-specific models derived by transfer learning from the same base model.

**In** some cases, the transfer learning is performed using a supervised learning paradigm. Supervised learning is one of three basic machine learning paradigms, alongside unsupervised learning, and reinforcement learning. Supervised learning is a machine learning technique based on learning a function that maps an input to an output based on example input-output pairs. Supervised learning generates a function for predicting labeled data based on labeled training data consisting of a set of training examples. **In** some cases, each example is a pair consisting of an input object (e.g., a vector or a two-dimensional map) and a desired output value (i.e., a single value, or an output vector, or an output map). A supervised learning algorithm analyzes the training data and produces the inferred function, which can be used for mapping new examples. **In** some cases, the learning results in a function that correctly determines values or class labels for unseen instances. **In** other words, the learning algorithm generalizes from the training data to unseen examples.

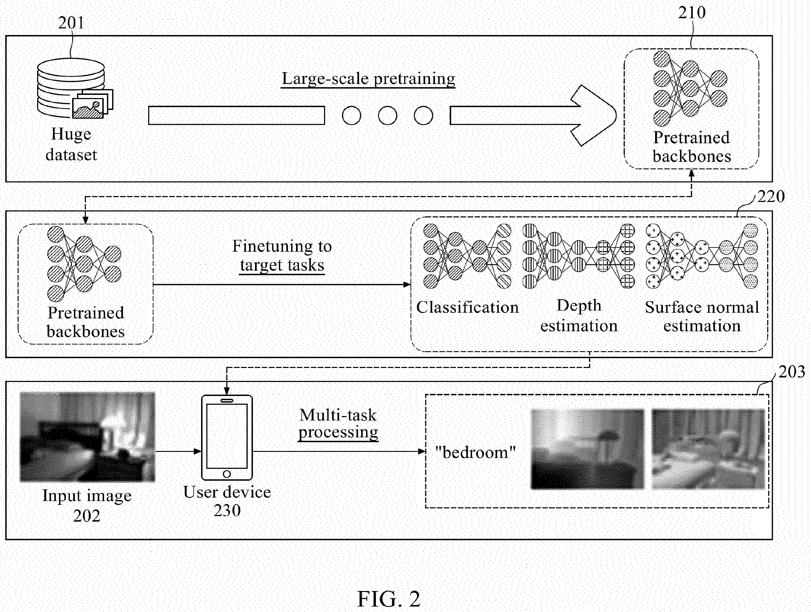

For example, referring to FIG. 2, a plurality of task-specific models 220 may be derived from a base model 210 pretrained using a relatively large training dataset 201 (i.e., larger than a training set used for fine-tuning). The task-specific models 220 corresponding to respective tasks may be generated through fine-tuning of weights of layers included in the base model 210 for the respective tasks. For example, the base model 210 may be tuned by transfer learning using a relatively small training dataset corresponding to each task to create task-specific models 220. For example, the base model 210 may correspond to a general image processing model, and the task-specific models 220 derived from the base model 210 may include at least one of an object classification model, a depth estimation model, or a surface normal estimation model.

The task-specific models 220 derived from the base model 210 may include a same layered structure of the base model 210. The task-specific models 220 may include the layered structure having the same size and arrangement as those of the layers included in the base model 210. Weights of layers included in the task-specific models 220 may correspond to tuned values of the weights of the layers included in the base model 210. **In** some cases, weights or layers may be added or removed from a task-specific model prior to or during the fine-tuning.

The task-specific models 220 may further include at least one layer in the layered structure included in the base model 210. For example, a task-specific model 220 for object classification may further include a function layer for classification in addition to the layers included in the base model 210.

According to an example embodiment, an apparatus 230 for multi-task processing may output a result of processing a plurality of tasks in response to input data (e.g., an image), using the task-specific models 220 derived from the base model 210. For example, the apparatus 230 may perform an operation of each of the task-specific models 220 corresponding to an input image 202 by applying the input image 202 to each of the task-specific models 220, and may output a result 203 of performing the operation. For example, the apparatus 230 may simultaneously perform operations for object classification, depth estimation, and surface normal estimation based on the task-specific models 220 in response to the input image 202.

For example, as illustrated in FIG. 2, a hardware-limited device such as a mobile device may take an image as input (e.g., an image of a room) and perform a multi-task CV operation that includes tasks such as classifying the image or identifying objects in the image. In some cases, the output of the machine learning model may be applied to other downstream tasks such as generating an augmented reality (AR) augmentation of the image. Because embodiments of the disclosure enable multiple tasks to be performed efficiently, such tasks can be performed in real time on devices using reduced computation and hardware resources.

According to an example embodiment, the first neural network and the second neural network may each include a sequence of a plurality of layers performing a series of operations on the input data. A layer may be a unit for an operation (or a computational unit), and a neural network may include one or more layers. The layers included in the neural network may each have a preset order, and operations may be performed according to the order. For example, output data of a specific layer may correspond to input data of a subsequent layer of the layer. An input map of an initial layer of the neural network may correspond to input data.

According to an example embodiment, input data and output data of a layer may be provided in the form of a map. For example, the input data of the layer may correspond to an input map corresponding to the layer, and the output data of the layer may correspond to an output map corresponding to the layer. For example, the input map and the output map of the layer may correspond to an activation map. The term activation may refer to a non-linear function for generating output values based on the input values. The activation function may include multiple weights, which may be referred to as the activation map.

According to an example embodiment, the first neural network and the second neural network may include layers included in the base model. A weight of a layer included in the first neural network may correspond to a tuned value of a weight of the layer included in the base model, and a weight of a layer included in the second neural network may correspond to a tuned value of the weight of the layer included in the base model.

According to an example embodiment, the first neural network and the second neural network may have some different layers. For example, a weight of a specific layer of the first neural network that is obtained by tuning a weight of the layer of the base model may be a value different from a weight of the layer of the second neural network that is obtained by tuning the weight of the same layer of the base model. For example, at least one layer may be further added to the first neural network and the second neural network in addition to the layers included in the base model. For example, the first neural network may further include an activation function layer in addition to the layers included in the base model, and the second neural network may further include at least one convolution layer in addition to the layers included in the base model. For example, the first neural network and the second neural network may include convolutional neural networks (CNNs).

A CNN is a class of neural network that is commonly used in computer vision or image classification systems. In some cases, a CNN may enable processing of digital images with minimal pre-processing. A CNN may be characterized by the use of convolutional (or cross-correlational) hidden layers. These layers apply a convolution operation to the input before signaling the result to the next layer. Each convolutional node may process data for a limited field of input (i.e., the receptive field). During a forward pass of the CNN, filters at each layer may be convolved across the input volume, computing the dot product between the filter and the input. During the training process, the filters may be modified so that they activate when they detect a particular feature within the input.

Referring back to FIG. 1, operation 110 may include obtaining the base output map corresponding to the first layer of the first neural network by applying, to the first layer, a base input map corresponding to the first layer of the first neural network.

According to an example embodiment, the first neural network may be one selected from among a plurality of task-specific models derived from the base model. For example, the first neural network may be a model predetermined by a user from among the task-specific models, or may be determined based on a criterion predetermined in the process of training the task-specific models. For example, the first neural network may be a task-specific model having a high similarity in an input/output map to other task-specific models, selected from among the task-specific models.

According to an example embodiment, the base input map may be obtained from a memory. The base input map may correspond to data stored in the memory based on an output map of a previous layer of the first layer in the first neural network.

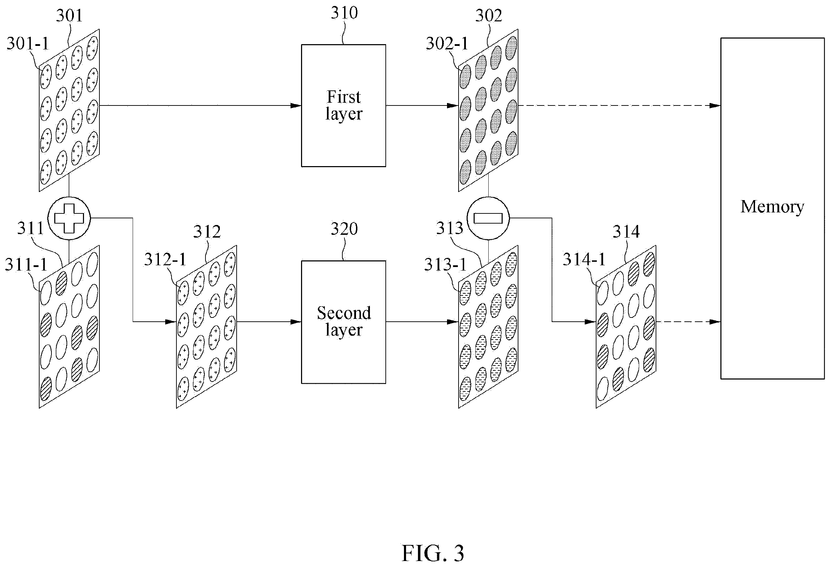

According to an example embodiment, the base output map may be obtained as the output of the operation the first layer on the base input map. For example, referring to FIG. 3, when a first layer 310 is a convolution layer, a base input map 301 may correspond to data obtained as an operation result of a previous convolution layer of the first layer 310 in a first neural network. A result of performing a convolution operation between the base input map 301 and a weight of the first layer 310 may be obtained as a base output map 302.

Referring back to FIG. 1, operation 110 may include obtaining an output map corresponding to the first layer by applying a base input map to the first layer and compressing the output map corresponding to the first layer to obtain the base output map corresponding to the first layer. The base output map may correspond to a result of compressing the output map obtained by applying the base input map to the first layer. For example, the output map corresponding to the first layer may be compressed through a compression method, such as, quantization.

Also, operation 120 may include restoring an input map corresponding to the second layer based on a delta input map corresponding to the second layer of the second neural network and the base input map.

According to an example embodiment, the first layer 310 may correspond to any one of the layers included in the base model corresponding to the first neural network and the second neural network. The second layer 320 may correspond to the same layer as the first layer 310 among the layers included in the base model. In some examples, the first neural network is the base model, and the second neural network is fine-tuned based on the first neural network.

The first layer 310 and the second layer 320 may correspond to layers derived from the same layer of the base model. The first layer 310 and the second layer 320 may correspond to layers generated by tuning a weight of the same layer of the base model.

According to an example embodiment, the delta input map corresponding to the second layer 320 may be obtained from the memory. The delta input map corresponding to the second layer 320 may correspond to data stored in the memory based on an output map of a previous layer of the second layer 320 in the second neural network.

According to an example embodiment, operation 120 of restoring the input map corresponding to the second layer may include adding up the base input map and the delta input map to restore the input map corresponding to the second layer. For example, referring to FIG. 3, an input map 312 corresponding to a second layer 320 is restored by adding the base input map 301 and a delta input map 311. For example, the base input map 301 and the delta input map 311 may be maps of the same size. For example, the base input map 301 and the delta input map 311 may be of the size of W×H×C. In this example, W, H, and C may denote the number of rows, columns, and channels of a map, respectively, and may be set to natural numbers. In the example of FIG. 3, the base input map 301 and the delta input map 311 may be of the size of 4×4×1.

For example, adding the base input map 301 and the delta input map 311 may indicate adding up values of elements at the same position in the base input map 301 and the delta input map 311. For example, a value of an element 301-1 at a position (1, 1) in the base input map 301 and a value of an element 311-1 at the position (1, 1) in the delta input map 311 may be added, and a value of an element 312-1 at the position (1, 1) in the input map 312 corresponding to the second layer 320 may thereby be obtained.

Referring back to FIG. 1, operation 130 may include obtaining the output map corresponding to the second layer by applying, to the second layer, the restored input map of the second layer.

According to an example embodiment, the output map corresponding to the second layer may be obtained as an operation result of the second layer and the restored input map corresponding to the second layer. For example, referring to FIG. 3, when the second layer 320 is a convolution layer, a result of performing a convolution operation on the input map 312 corresponding to the second layer 320 and a weight of the second layer 320 may be obtained as an output map 313 corresponding to the second layer 320.

Referring back to FIG. 1, operation 140 includes obtaining the delta output map corresponding to the second layer based on a difference between the base output map and the output map corresponding to the second layer. Also, operation 140 may include subtracting the base output map from the output map corresponding to the second layer to obtain the delta output map corresponding to the second layer. In another example, the output map corresponding to the second layer may be subtracted from the base output map to obtain the delta output map.

For example, referring to FIG. 3, a delta output map 314 corresponding to the second layer 320 may be obtained by subtracting the output map 313 corresponding to the second layer 320 from the base output map 302. The base output map 302 and the output map 313 corresponding to the second layer 320 may be maps of the same size. For example, the base output map 302 and the output map 313 corresponding to the second layer 320 may be of the size of W×H×C where W, H, and C denote the number of rows, columns, and channels of a map, respectively, and may be set to natural numbers. In the example of FIG. 3, the base output map 302 and the output map 313 may be of the size of 4×4×1. However, any number of rows, columns, and channels may be used.

For example, the subtraction of the output map 313 corresponding to the second layer 320 from the base output map 302 may indicate subtraction between values of elements at the same position in the output map 313 corresponding to the second layer 320 and the base output map 302. For example, a value of an element 313-1 at a position (1, 1) in the output map 313 corresponding to the second layer 320 may be subtracted from a value of an element 302-1 at a position (1, 1) of the base output map 302, and a value of an element 314-1 at the position (1, 1) in the delta output map 314 corresponding to the second layer 320 may thereby be obtained.

Referring back to FIG. 1, operation 140 may include compressing the output map corresponding to the second layer and subtracting the compressed output map corresponding to the second layer from the base output map to obtain the delta output map corresponding to the second layer.

According to an example embodiment, the compressing of the output map corresponding to the second layer may include compressing the output map corresponding to the second layer through quantization.

According to an example embodiment, the base output map and the delta output map corresponding to the second layer may be stored in the memory. For example, the base output map may be stored in relation to the first neural network, and the delta output map may be stored in relation to the second neural network.

According to an example embodiment, operation 150 may include compressing the delta output map based on a characteristic of a sparse matrix of the delta output map and encoding the compressed delta output map and the base output map to store the base output map and the delta output map. The delta output map may correspond to the sparse matrix including a plurality of elements having a value of zero. The delta output map is compressed based on the characteristic of the sparse matrix including the elements having the value of zero.

For example, the delta output map may be compressed through pruning. In a pruning example, among the elements of the delta output map, elements having a value less than a preset threshold value may be changed to zero. For another example, the delta output map is compressed by being changed to metadata including positions of non-zero elements and values of the non-zero elements. In some examples, a compressed output map may be stored using a compression format such as a Compressed Sparse Row (CSR) or a Compressed Sparse Column (CSC) format, or using any other compression format.

According to an example embodiment, operation 150 may include storing the base output map as a base input map corresponding to a subsequent layer of the first layer, and storing the delta output map as a delta input map corresponding to a subsequent layer of the second layer. As in a case where the base input map for obtaining the base output map corresponds to data stored as a result of a previous layer of the first layer, the base output map may be stored as the base input map for an operation of the subsequent layer of the first layer. Similarly, as in a case where the delta input map for obtaining the delta output map corresponds to data stored as a result of a previous layer of the second layer, the delta output map may be stored as the delta output map for an operation of the subsequent layer of the second layer.

According to an example embodiment, when the first layer and the second layer are, respectively, initial layers of the first neural network and the second neural network, the multi-task processing method may further include storing a first map obtained by applying the input data to the initial layer of the first neural network as a base input map corresponding to a next layer (which is a subsequent layer of the initial layer) of the first neural network; and storing a difference between the first map and a second map obtained by applying the input data to the initial layer of the second neural network as a delta input map corresponding to a next layer (which is a subsequent layer of the initial layer) of the second neural network. For example, when the first layer is the initial layer of the first neural network, there may be no previous layer of the first layer, which may indicate a state in which no base input map for an operation of the first layer is stored in the memory. In this example, the input data may be used as the base input map for an operation of the initial layer of the first neural network. For example, when the second layer is the initial layer of the second neural network, this may indicate a state in which no delta input map for restoring the input map corresponding to the second layer is stored in the memory. In this example, the restoring of the input map corresponding to the second neural network may be omitted, and the input data may be used as the base input map for an operation of the initial layer of the second neural network.

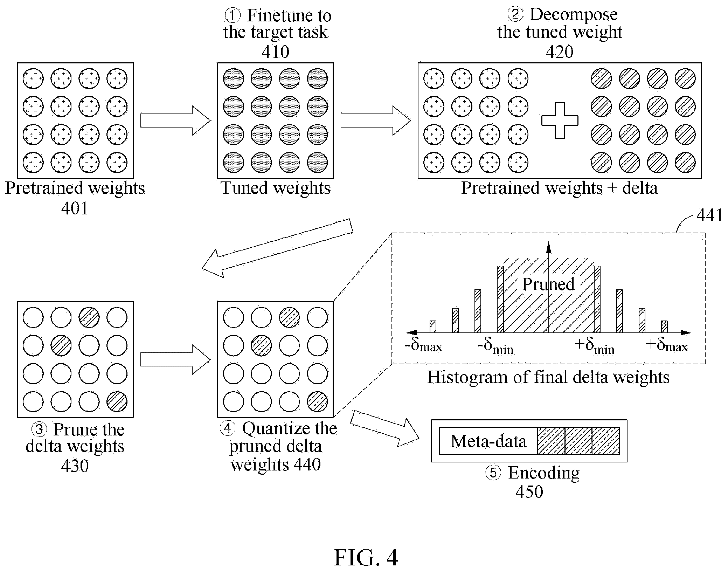

According to an example embodiment, the multi-task processing method may correspond to a SqueeD algorithm. SqueeD may refer to a combination of two algorithms: a delta weight squeeze (DWS) algorithm and a delta activation squeeze (DAS) algorithm. The DAS algorithm may correspond to the multi-task processing method described with reference to FIG. 1. The DWS algorithm is described with reference to FIG. 4.

According to an example embodiment, the multi-task processing method may further include restoring the first layer and the second layer. In the multi-task processing method, the restoring of the first layer and the second layer may include obtaining a base weight corresponding to the first layer and the second layer based on a base model corresponding to the first neural network and the second neural network; obtaining a first delta weight corresponding to the first layer and a second delta weight corresponding to the second layer; and restoring the first layer based on the base weight and the first delta weight and restoring the second layer based on the base weight and the second delta weight.

The restoring of the first layer and the second layer may be performed based on the delta weights stored by being compressed, respectively, for the first neural network and the second neural network and on the base weight. The base weight may correspond to a weight of a layer included in the base model from which the first neural network and the second neural network are derived. A method of compressing and storing a weight of a layer of a neural network as a delta weight may be referred to as the DWS algorithm. In another example, a first layer of the first neural network corresponds to base weights, and only the second neural network (e.g., the second layer from the second neural network) is obtain based on delta weights. In this case, only weights from the second neural network are restored based on stored delta weights.

FIG. 4 illustrates an example of a data weight squeeze (DWS) algorithm.

Referring to FIG. 4, the DWS algorithm includes operation 410 of fine-tuning weights of task-specific models using weights 401 of a pretrained base model as a backbone. The first neural network and the second neural network described above may correspond to the task-specific models. In another example, one of the first neural network or the second neural network corresponds to the base model. In some cases, the first neural network or the second neural network includes additional layers in addition to the layers of the base model.

According to an example embodiment, the DWS algorithm may include operation 420 of decomposing the tuned weights of the task-specific models into a weight of the base model and a delta weight. For example, for a task-specific model W^{t} that is tuned in relation to a weight lₜₕ and a task t of a pretrained base model W^{B}, a delta weight δ^{t}_{w}∈Δ^{t}_{w} which is a parameter corresponding to the task-specific model W^{t} may be defined as a variation in weight after the fine-tuning, as represented by Equation 1 below. [Equation 1] ${W}^{t} = {W}^{B} + {Δ}_{w}^{t} .$

The DWS algorithm may include compressing Δ^{t}_{w}, using a compression method such as pruning and quantization. For example, the first delta weight and the second delta weight described above may correspond to the delta weight Δ^{t}_{w}.

According to an example embodiment, the DWS algorithm may include operation 430 of performing magnitude-based pruning along with relearning of Δ^{t}_{w}. For example, during the relearning, a bit mask matrix M^{t} may be updated such that a delta weight of p% has a value of zero. Operation 430 of performing the pruning on Δ^{t}_{w} may be represented by Equation 2 below. [Equation 2] $\left({W}^{t}\right) ′ = {W}^{B} + {Δ}_{w}^{t} ⊙ {M}^{t} .$

In Equation 2, M^{t} denotes a bit mask matrix for a delta weight, and the operator ⊙ denotes a Hadamard product.

According to an example embodiment, after pruning the delta weight, the DWS algorithm may include operation 440 of performing q_{w}-bit quantization on a remaining delta weight as represented by Equation 3 below. [Equation 3] $\left({W}^{t}\right) " = {W}^{B} + {Q}_{{q}_{w}} \left({Δ}_{w}^{t}⊙{M}^{t}\right) .$

For example, extensive data close to zero (i.e., within a threshold distance of zero) among elements of a delta weight matrix may be removed after the pruning. Linearly quantizing a range of delta weights may not completely use a limited representation level in a short bit-width. Thus, a range of first pruned delta weights may be divided into a negative part {-δtw,max, -δtw,min} and a positive part {+δtw,min, +δtw,max}. Here, δtw,max and δtw,min, respectively, denote a maximum value and a minimum value of an absolute value of an element of Δ^{t}_{w} ⊙ M^{t}. Subsequently, each part may be quantized to a level of 2^{qw-1}. That is, a q_{w}-bit quantization function Q_{qw}(δ^{t}_{w}) for the delta weight matrix may be represented by Equation 4 below. [Equation 4] $sign \left({δ}_{w}^{t}\right) ⊙ \left(\left[\left(\left|{δ}_{w}^{t}\right|-{δ}_{w , min}^{t}\right)⋅\frac{S}{{R}_{I}}\right]⋅\frac{{R}_{I}}{S}+{δ}_{w , min}^{t}\right)$

In Equation 4, the quantization range may be R₁ = δ^{t}_{w,max} - δ^{t}_{w,min}, and S=2^{qw-1}-1 may be a scalar. For example, histogram 441, shown in FIG. 4, may correspond to a delta weight distribution obtained after the pruning and quantization are performed.

According to an example embodiment, the task-specific models may be retrained with an amortization error from the pruning and quantization. For example, a straight line may be applied through an estimator to calculate a gradient of delta weights modified in backpropagation. A partial derivative function of an error function E for δ^{t}_{w} may be represented by Equation 5 below. [Equation 5] $\frac{\partial E}{\partial {δ}_{w}^{t}} = \frac{\partial E}{\partial \left({w}^{t}\right) "} ⋅ {m}^{t} .$

In Equation 5 above, (w^{t})"∈(W^{t})", and m^{t}∈M^{t}.

According to an example embodiment, the DWS algorithm may include operation 450 of encoding the relearned delta weights. For example, the relearned delta weight matrix may be encoded into a sparse form. The encoded delta weights may include metadata and quantized non-zero values of the relearned delta weights. The metadata may include position information of the non-zero values and quantization parameters such as Rₗ/S and δ^{t}_{w,min}. To encode the delta weights into a compressed form, a compressed sparse row (CSR), or compressed sparse column (CSC), and each filter may be stored separately.

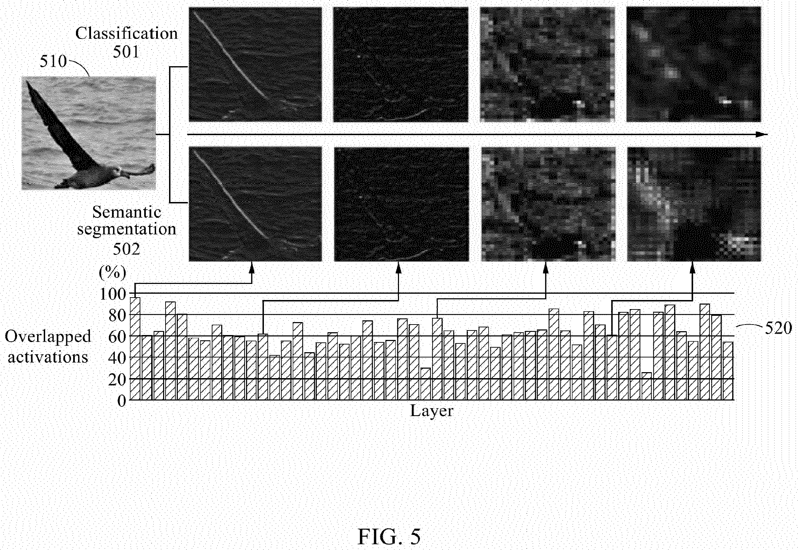

FIG. 5 illustrates examples of activation maps generated in task-specific models.

Referring to FIG. 5, activation maps are generated in layers of tuned models for a classification task 501 and a semantic segmentation task 502, respectively.

In some examples, the neural networks comprise a ResNet architecture. A ResNet is a neural network architecture that addresses issues associated with training deep neural networks. It operates by including identity shortcut connections that skip one or more layers of the network. In a ResNet, stacking additional layers doesn't degrade performance or introduce training errors because skipping layers avoids the vanishing gradient problem of deep networks. In other words, the training gradient can follow "shortcuts" through the deep network. Weights are adjusted to "skip" a layer and amplify a previous skipped layer. In an example scenario, weights for an adjacent layer are adjusted and weights are not applied to an upstream layer.

To the two models, the same data 510 may be input. For example, the first neural network and the second neural network that are described above may correspond to the two models (e.g., ResNet-50 models) respectively corresponding to the classification task 501 and the semantic segmentation task 502. An input map corresponding to a layer and an output map corresponding to the layer may correspond to an activation map. An activation map may represent an input map corresponding to a layer or an output map corresponding to the layer.

A graph 520 shown in FIG. 5 represents a similarity of the activation maps generated in the models corresponding to the two tasks according to a layer progress direction, in which a horizontal axis indicates the layer progress direction, and a vertical axis indicates the similarity between two activation maps. The progress direction may represent an order in which operations (or computations) are performed in a model including a plurality of layers. For example, a bar positioned leftmost among bars shown in the graph 520 may indicate a similarity of an activation map generated in an initial layer in an operation order of the models corresponding to the two tasks.

According to an example embodiment, the activation maps generated in the two models may have a high similarity because they are generated from the same input data 510. Further, the two quantized activation maps may be the same in many parts. The graph 520 of FIG. 5 may indicate that, when the activation maps generated in the two models are quantized to 8 bits, the activation maps may be the same by, for example, 70.1% on average in the percentage of activation which is indicated by the same value in the two activation maps. This may be, for example, 1.3 times higher than an average sparsity of an activation map (i.e., a ratio of zeros in an activation map, for example, 53.1%). A compression method, such as the DAS algorithm, may be used to reduce the size of input/output activation, using a characteristic that the similarity of input/output activation maps generated in task-specific models derived from the same base model is high.

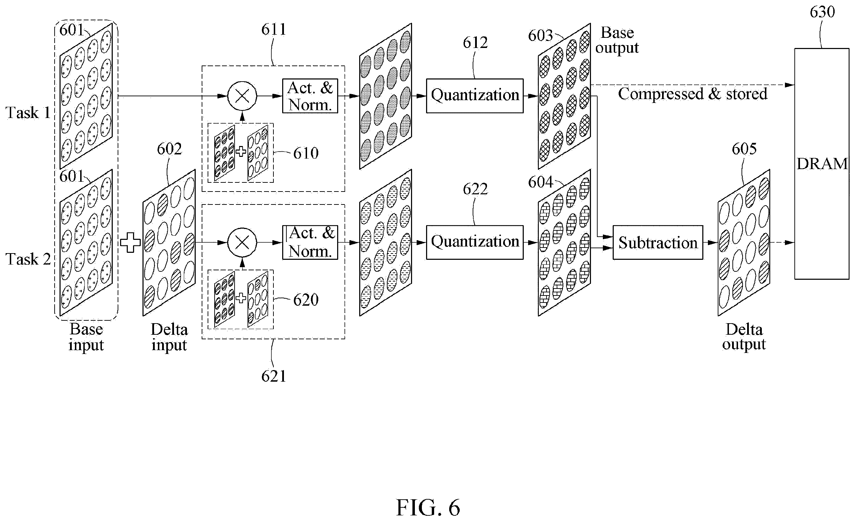

FIG. 6 illustrates an example of a multi-task processing method. Some embodiments of the multi-task processing method include SqueeD-based multi-task processing, including a DAS algorithm and a DWS algorithm.

The DAS algorithm may be similar to the DWS algorithm but may not include additional relearning of an amortization compression error (or an amortizing compression error) when using quantized networks. Similar to weights of the DWS algorithm, activation maps of the DAS algorithm may include a base activation map and a delta activation map. The base input map and the base output map that are described above may correspond to the base activation map. The base activation map may represent a base input map or a base output map corresponding to a layer. The delta input map and the delta output map that are described above may correspond to the delta activation map. The delta activation map may represent a delta input map or a delta output map corresponding to a layer.

According to an example embodiment, a task (e.g., a primary task among a plurality of tasks) may be set as a base task. An activation map generated in a selected neural network (e.g., a task-specific model) for processing the base task may be set as the base activation map. The delta activation map may be defined as a difference between the base activation map and an original activation map generated in a neural network for processing another task that is not the base task.

For example, referring to FIG. 6, an input map 601 corresponding to a first layer 610 of a first neural network for processing of task 1 may be set as a base input map. In addition, an input map corresponding to a second layer 620 of a second neural network for processing task 2 may be restored by adding the input map 601 and a delta input map 602 corresponding to the second layer 620.

According to an example embodiment, the first layer 610 may be restored based on a base weight and a first delta weight stored in relation to the first layer 610 of the first neural network. For example, the first layer 610 may be restored by summing the base weight and the first delta weight. In addition, the second layer 620 may be restored based on the base weight and a second delta weight stored in relation to the second layer 620 of the second neural network. For example, the second layer 620 may be restored by a sum of the base weight and the second delta weight. In some examples, only one of the first layer 610 or the second layer 620 is restored based on delta weights.

According to an example embodiment, after a series of layer operations 611 and 621 and quantization operations 612 and 622 are performed, output maps 603 and 604 corresponding to the respective tasks may be generated. For example, the output map 603 corresponding to the first layer 610 of the first neural network for processing task 1 may be set as a base output map. A delta output map 605 corresponding to the second layer 620 of the second neural network for processing task 2 may be calculated by subtracting the base output map 603 from the output map 604 corresponding to the second layer 620. The delta output map 605 corresponding to task 2, which is a sparse matrix, may be compressed and stored in a memory (e.g., a dynamic random-access memory (DRAM) 630). The base output map 603 may be compressed with its sparsity and stored in the memory. The sparsity of the delta output map 605 may vary depending on a task selected as the base task.

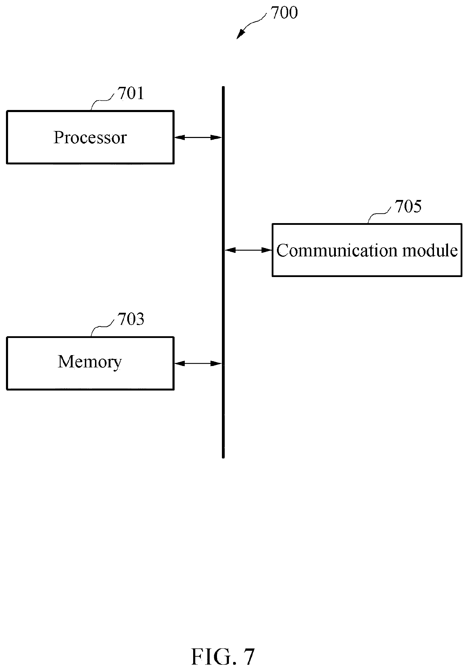

FIG. 7 illustrates an example of an apparatus.

Referring to FIG. 7, an apparatus 700 according to an example embodiment may include a processor 701, a memory 703, and a communication module 705. The apparatus 700 may include an apparatus performing the multi-task processing method described above with reference to FIGS. 1 to 6.

The processor 701 may perform at least one of the operations described above with reference to FIGS. 1 to 6. In some examples, processor 701 executes instructions (i.e., software code) stored in the memory 703. For example, the processor 701 may perform at least one of an operation of obtaining a base output map corresponding to a first layer, an operation of restoring an input map corresponding to a second layer, an operation of obtaining an output map corresponding to the second layer, an operation of obtaining a delta output map corresponding to the second layer, or an operation of storing the base output map and the delta output map.

Processor 701 may be an intelligent hardware device, (e.g., a general-purpose processing component, a digital signal processor (DSP), a central processing unit (CPU), a graphics processing unit (GPU), a microcontroller, an application specific integrated circuit (ASIC), a field programmable gate array (FPGA), a programmable logic device, a discrete gate or transistor logic component, a discrete hardware component, or any combination thereof). In some cases, the processor is configured to operate a memory array using a memory controller. In other cases, a memory controller is integrated into the processor. In some cases, the processor is configured to execute computer-readable instructions stored in a memory to perform various functions. In some embodiments, a processor includes special purpose components for modem processing, baseband processing, digital signal processing, or transmission processing.

Processor 701 may execute software. Software may include code to implement aspects of the present disclosure. Software may be stored in a non-transitory computer-readable medium such as memory 703 or other system memory. In some cases, the software may not be directly executable by the processor but may cause a computer (e.g., when compiled and executed) to perform functions described herein.

The memory 703 may be a volatile memory or a non-volatile memory and may store data related to the multi-task processing method described above with reference to FIGS. 1 to 6. Examples of a memory device include flash memory, random access memory (RAM), read-only memory (ROM), or a hard disk. Examples of memory devices include solid state memory and a hard disk drive. In some examples, memory is used to store computer-readable, computer-executable software including instructions that, when executed, cause a processor to perform various functions described herein. In some cases, the memory contains, among other things, a basic input/output system (BIOS) which controls basic hardware or software operation such as the interaction with peripheral components or devices. In some cases, a memory controller operates memory cells. For example, the memory controller can include a row decoder, column decoder, or both. In some cases, memory cells within a memory store information in the form of a logical state.

For example, the memory 703 may store data generated during the execution of the multi-task processing method or data required to perform the multi-task processing method. For example, the memory 703 may store a base input map corresponding to the first layer and a delta input map corresponding to the second layer. For example, the memory 703 may store a base weight corresponding to the first layer and the second layer, and a first delta weight corresponding to the first layer and a second delta weight corresponding to the second layer.

The communication module 705 may provide a function for the apparatus 700 to communicate with other electronic devices or servers over a network. The apparatus 700 may be connected to an external device (e.g., a user terminal, a server, or a network) through the communication module 705 and may exchange data therewith.

According to an example embodiment, the memory 703 may not be included in the apparatus 700 but may be included in an external device accessible from the apparatus 700. In this case, the apparatus 700 may receive data stored in the memory 703 included in the external device through the communication module 705 and may transmit data to be stored in the memory 703.

According to an example embodiment, the memory 703 may store a program in which the multi-task processing method described above with reference to FIGS. 1 to 6 is implemented. The processor 701 may execute the program stored in the memory 703 and control the apparatus 700. Code of the program executed by the processor 701 may be stored in the memory 703.

The apparatus 700 may further include other components that are not shown. For example, the apparatus 700 may further include an input/output interface including an input device and an output device as a means for interfacing with the communication module 705. For another example, the apparatus 700 may further include other components such as a transceiver, various sensors, a database, or the like.

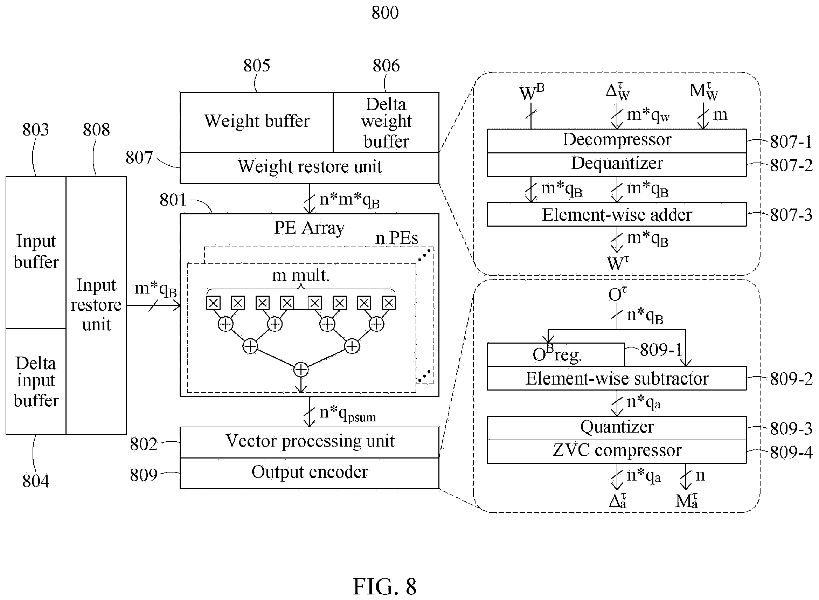

FIG. 8 illustrates an example of a hardware architecture of an apparatus performing a multi-task processing method.

Referring to FIG. 8, an apparatus 800 performing a multi-task processing method according to an example embodiment may correspond to the apparatus 700 of FIG. 7. The apparatus 800 may perform the multi-task processing method using an algorithm such as, for example, the SqueeD algorithm described above. For example, the apparatus 800 may process multiple tasks using SqueeD, or another algorithm, to reduce off-chip memory access.

The apparatus 800 may include a processing element (PE) array 801 that operates in an output-stationary state and a vector processing unit 802 for activation, normalization, and quantization. The PE array 801 may include multiple (i.e., n) PEs, and a single PE may include multiple (i.e., m) multipliers.

Abase activation map may be stored in an input buffer 803, and a delta activation map may be stored in a delta input buffer 804.

A base weight may be stored in a weight buffer 805, and delta weights including a first delta weight and a second delta weight may be stored in a delta weight buffer 806.

The apparatus 800 may include a weight restore unit (WRU) 807 allocated to one PE. The WRU 807 may include a CSC decompressor 807-1 and a dequantizer 807-2 to decode the delta weights, and an element-wise adder 807-3 to add up the base weight and decoded delta weights.

An input restore unit (IRU) 808 may be similar to the WRU 807, but a decompressor of the IRU 808 may be configured in the form of a zero value compression (ZVC). The IRU 808 may not include a dequantizer.

An output encoder 809 may extract and compress a delta output map obtained from a layer of a neural network. The output encoder 809 may include a register 809-1 for storing a base output map. The output encoder 809 may include an element-wise subtractor 809-2, and the element-wise subtractor 809-2 may perform subtraction on the base output map and an output map obtained for each task to obtain the delta output map corresponding to each task. The delta output map may be compressed through a quantizer 809-3 and a ZVC compressor 809-4, and the encoded delta output may be stored in a DRAM. The base output map may also be encoded and stored in the DRAM.

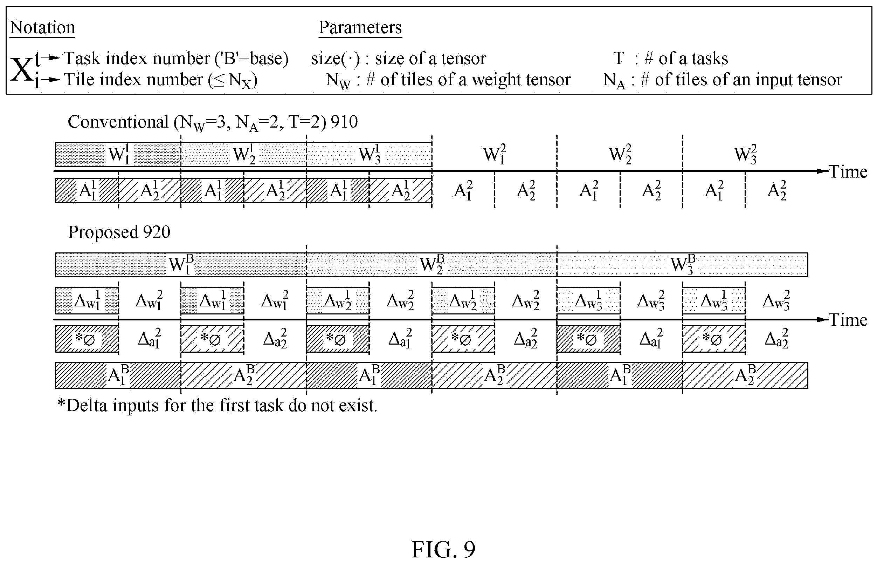

FIG. 9 illustrates an example of a data flow in layer operations.

A data flow according to an example embodiment may reduce redundant access to off-chip memory by maximally reusing a loaded base weight/input map. In the example of FIG. 9, a weight and an input map for one task are divided into three tiles and two tiles, respectively, and two tasks are simultaneously processed. In the example of FIG. 9, a timeline indicates a tile occupying a PE array at each time point. When a tile occupying a PE is changed, DRAM read access may occur. In the example of FIG. 9, a weight tile is indicated as ${W}_{i}^{t}$, and an input map is indicated as ${A}_{i}^{t}$.

Referring to FIG. 9, in a data flow 910 according to a conventional multi-task processing method, a weight tile may be read once, but an input tile may be iteratively read N_{w} times due to tiling. As the number of tasks increases, DRAM read access may increase linearly according to the number of tasks because each task is processed individually. Therefore, DRAM read access R_{c} in the conventional data flow 910 may be roughly calculated as represented by Equation 6 below. [Equation 6] ${R}_{c} \approx \left(size\left(W\right)+size\left(A\right)⋅{N}_{W}\right) ⋅ T$

In contrast, in a data flow 920 according to embodiments of the present disclosure (e.g., using the SqueeD algorithm), a base weight and an input map may be maximally reused between tasks, and thus the base weight and the base input map may be read a consistent number of times regardless of the number of tasks. A delta weight and a delta input map for each task may be read N_{A} and N_{W} times, respectively. Therefore, read access ratio ratio_{read} of Rₚ, compared to the number of the DRAM read access R_{c} in the data flow 910, may be calculated as represented by Equations 7 and 8 below. [Equation 7] ${R}_{p} \approx size \left(W\right) + size \left(A\right) ⋅ {N}_{W} + size \left({Δ}_{W}\right) ⋅ {N}_{A} ⋅ T + size \left({Δ}_{A}\right) ⋅ {N}_{W} ⋅ \left(T-1\right)$ [Equation 8] ${ratio}_{read} = \frac{{R}_{p}}{{R}_{c}} \approx \frac{1}{T} + \frac{size \left({Δ}_{w}\right) ⋅ {N}_{A} + size \left({Δ}_{a}\right) ⋅ {N}_{W}}{size \left(W\right) + size \left(A\right) ⋅ {N}_{W}}$

Referring to Equations 7 and 8 above, relative read access of the described data flow 920 may decrease as T increases. Accordingly, the ratio can be less than 1 even at T=2.

A ratio ratio_{write} of the number of DRAM write access W_{P} in the data flow 920, compared to the number of DRAM write access W_{C} in the data flow 910, may be estimated as represented by Equation 9 below. [Equation 9] ${ratio}_{write} = \frac{{W}_{p}}{{W}_{c}} \approx \frac{size \left(A\right) + size \left({Δ}_{a}\right) ⋅ \left(T-1\right)}{size \left(A\right) ⋅ T} = \frac{1}{T} + \frac{size \left({Δ}_{a}\right)}{size \left(A\right)} ⋅ \frac{T - 1}{T}$

Similarly, ratio_{write} may be less than 1 when T > 1, and may decrease as T increases. The estimations described above may be derived from a weight reuse data flow, but the estimation of an input reuse data flow may also reach a similar result.

Accordingly, embodiments of the disclosure reduce the weight and the size of an activation map by, for example, between a factor of 21.9 and a factor of 2.1, respectively, per task by sharing data between tasks. In addition, processing multiple tasks using a hardware architecture for minimizing DRAM access by utilizing the effects of SqueeD may reduce an increment in DRAM access and an increment in energy consumption by a factor of 2.2 and a factor of 1.3, respectively, per task.

The DWS algorithm, which is one of the algorithms according to an example embodiment, may prune and quantize delta weights of a model tuned from a pretrained model, and thus the size of weights stored for a task-specific model may decrease and a ratio of weights to be shared between tasks may increase. In addition, a DAS algorithm may be used for processing a single input image. The DAS algorithm compresses an activation map using a characteristic that intermediate activation maps between different tasks are highly similar.

In some cases, it is possible to effectively process multiple different computer vision (CV) tasks using the same hardware architecture. Embodiments of the architecture described herein maximize the reuse of shared weights and/or activation maps between tasks and may thereby reduce off-chip DRAM access required to process multiple models.

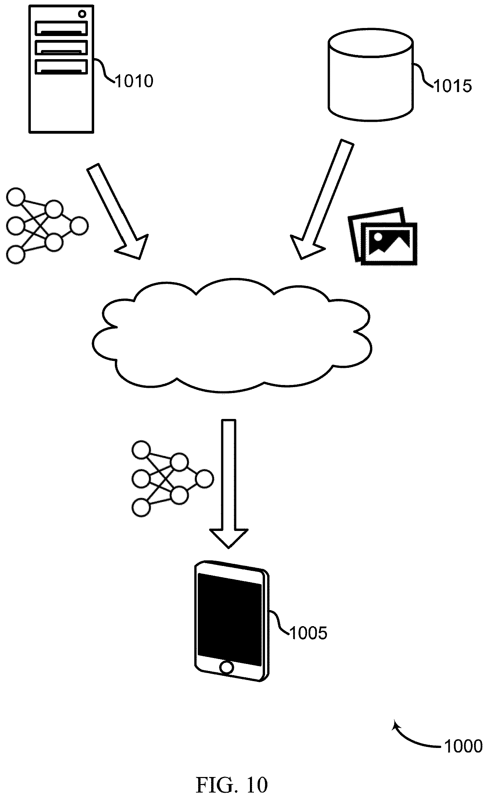

FIG. 10 illustrates a computer vision system 1000. The computer vision system 1000 may include a computing device 1005, a server 1010, and a database 1015. The computer vision system 1000 may be capable of generating and applying one or more neural networks capable performing multiple computer vision tasks on a computing device 1005 with limited hardware resources (e.g., limited processor or memory resources). The computing device 1005 may be an example of the apparatus 700 described with reference to FIG. 7, and may perform the multi-task methods described herein.

In some examples, the computing device 1005 is a personal computer, laptop computer, mainframe computer, palmtop computer, personal assistant, mobile device, or any other suitable processing apparatus. The computing device 1005 may include sensors (i.e., one or more cameras) for obtaining images which may be processed for multiple computer vision tasks simultaneously.

In one example, computing device 1005 may generate augmented reality images that depend on processing images in multiple ways, such as performing object detection and depth estimation. In another example, computing device 1005 may be located on a vehicle, and may perform tasks related to driving safety or navigation (e.g., for a self-driving vehicle). Based on the efficiencies derived from using the methods described herein, including the SqueeD algorithm, may enable complex computer vision tasks that depend on multiple computer vision subtasks to be performed on a device with limited hardware resources such as on a personal computing device, a mobile computing device, or a vehicle computing device.

The computing device 1005 may operate one or more neural networks for performing multiple computer vision tasks. The neural networks may be trained at another device, such as on a server 1010. In some cases, parameters for one or more neural networks are trained on the server 1010 and transmitted to the computing device 1005. In other examples, parameters for one or more neural networks are trained prior to manufacturing the computing device 1005.

The server 1010 provides one or more functions to users linked by way of one or more of the various networks. In some cases, the server includes a single microprocessor board, which includes a microprocessor responsible for controlling all aspects of the server. In some cases, a server uses microprocessor and protocols to exchange data with other devices/users on one or more of the networks via hypertext transfer protocol (HTTP), and simple mail transfer protocol (SMTP), although other protocols such as file transfer protocol (FTP), and simple network management protocol (SNMP) may also be used. In some cases, a server is configured to send and receive hypertext markup language (HTML) formatted files (e.g., for displaying web pages). In various embodiments, a server comprises a general-purpose computing device, a personal computer, a laptop computer, a mainframe computer, a supercomputer, or any other suitable processing apparatus.

In some cases, training data (e.g., training images for one or more computer vision tasks) for training the one or more machine learning models is stored at the database 1015. A database is an organized collection of data. For example, a database stores data in a specified format known as a schema. A database may be structured as a single database, a distributed database, multiple distributed databases, or an emergency backup database. In some cases, a database controller may manage data storage and processing in a database. In some cases, a user interacts with database controller. In other cases, a database controller may operate automatically without user interaction.

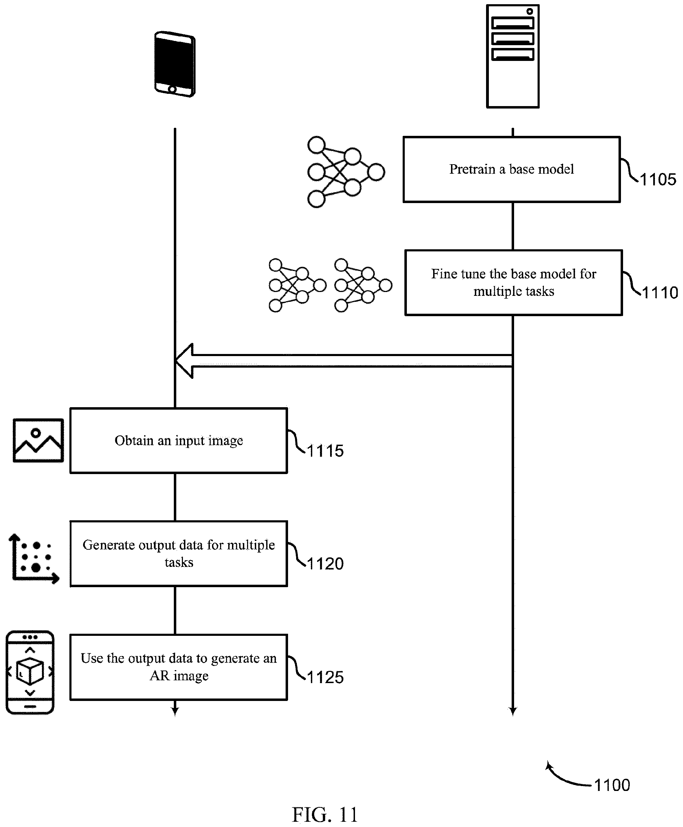

FIG. 11 illustrates an application of a computer vision system. For example, aspects of a computer vision process 1100 may be performed by the computer vision system 1000 described with reference to FIG. 10.

At step 1105, a server may pretrain a base model for performing computer vision tasks. For example, the base model may be trained based on a relatively large amount of training data.

At step 1110, the server may fine-tune the base model for multiple specific tasks. For example, each of the task-specific models may be initialized with parameters from the base model and fine-tuned using a relatively small amount of task-specific training data. The task-specific models may be transmitted to a smaller device such as a mobile device or a vehicle for performing a complex computer vision application such as generating augmented reality (AR) images or navigating a vehicle.

At step 1115, the computing device obtains an input image to be processed and used to perform the computer vision task. In some cases, the input image is used for generating multiple computer-vision related subtasks simultaneously, such as for object detection and depth perception.

At step 1120, the computing device processes the input image using multiple neural networks to obtain multiple task-specific outputs simultaneously. In some cases, the computing device processes the input image by storing values for one of the neural networks in a base form, and storing delta values for another neural network performing another computer vision task. Since many of the values at intermediate layers of the two neural networks are similar, processes of storing and retrieving the values can be performed efficiently by generating and storing delta values.

At step 1125, the computing device may use the output from the multiple computer vision tasks to perform a complex task such as generating AR images or navigating a vehicle (or another vehicle related task). The complex task may utilize inputs from multiple subtasks, such as object detection, classification, or depth perception. Since these tasks may be performed efficiently based on the methods described herein, the computing device may perform the complex task in real time with limited processing and memory resources.

The present description describes additional aspects of the methods, apparatuses, and/or systems related to the disclosure. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

Accordingly, the features described herein may be embodied in different forms and are not to be construed as being limited to the example embodiments described herein. Rather, the example embodiments described herein have been provided merely to illustrate some of the many possible ways of implementing the methods, apparatuses, and/or systems described herein that will be apparent after an understanding of the disclosure of this application. As used herein, "A or B," "at least one of A and B," "at least one of A or B," "A, B, or C," "at least one of A, B, and C," and "A, B, or C," each of which may include any one of the items listed together in the corresponding one of the phrases, or all possible combinations thereof. Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component. Throughout the disclosure, when an element is described as "connected to" or "coupled to" another element, it may be directly "connected to" or "coupled to" the other element, or there may be one or more other elements intervening therebetween. In contrast, when an element is described as "directly connected to" or "directly coupled to" another element, there may be no other elements intervening therebetween.

The terminology used herein is for describing various example embodiments only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein.

Also, in the description of example embodiments, description of structures or functions that are thereby known after an understanding of the disclosure of the present application will be omitted when it is deemed that such description will cause ambiguous interpretation of the example embodiments. Example embodiments are described with reference to the accompanying drawings, and like reference numerals in the drawings refer to like elements throughout.

The examples described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as, parallel processors.

Software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

While this disclosure includes specific examples, it will be apparent to one of ordinary skill in the art that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined not by the description, but by the claims.

## Claims

1. A method for simultaneously processing multiple computer vision tasks based on respective output maps (302, 313) of layers in a first neural network and a second neural network to which a same input image (202) is applied, the method being performed by at least one processor, the method comprising:
storing a base input map (301) corresponding to a first layer (310) of the first neural network, wherein the base input map (301) is a base output map (302) corresponding to a first previous layer of the first layer (310), and wherein, when the first layer is an initial layer of the first neural network, the base input map (301) corresponding to the first layer corresponds to the input image (202);
storing a delta input map (311) corresponding to a second layer (320) of the second neural network, wherein the delta input map (311) is a delta output map (314) corresponding to a second previous layer of the second layer (320) obtained based on a difference between the base output map (302) corresponding to a first previous layer and an output map (313) corresponding to the second previous layer;
obtaining (110) a base output map (302) corresponding to the first layer (310) of the first neural network by applying, to the first layer (310), the base input map (301) corresponding to the first layer (310);
restoring (120) an input map (312) corresponding to the second layer (320) of the second neural network by adding the delta input map (311) corresponding to the second layer (320) and the base input map (301) corresponding to the first layer (310), wherein, when the second layer is the initial layer of the second neural network, the input image (202) is used as the input map (312) corresponding to the second layer (320);
obtaining (130) an output map (313) corresponding to the second layer (320) by applying, to the second layer (320), the input map (312) corresponding to the second layer (320);
obtaining (140) a delta output map (314) corresponding to the second layer (320) based on a difference between the base output map (302) corresponding to the first layer (310) and the output map (313) corresponding to the second layer (320);
compressing the delta output map (314) corresponding to the second layer (320) by representing the delta output map (314) corresponding to the second layer (320) as metadata including positions and values of non-zero elements, and
compressing and storing (150) the base output map (302) as a base input map (301) corresponding to a subsequent layer of the first layer (310) and storing the compressed delta output map as a delta input map (311) corresponding to a subsequent layer of the second layer (320).

2. The method of claim 1, wherein the first neural network is obtained by fine-tuning a pretrained base model based on transfer learning for a first task, and
the second neural network is obtained by fine-tuning the base model based on transfer learning for a second task.

3. The method of one of claims 1 or 2, wherein the first layer (310) corresponds to a layer of a base model, and
the second layer (320) corresponds to the same layer of the base model as the first layer (310).

4. The method of one of claims 1 to 3, wherein the obtaining the base output map (302) corresponding to the first layer (310) comprises:
obtaining an output map corresponding to the first layer (310) by applying the base input map (301) to the first layer (310); and
quantizing the output map corresponding to the first layer (310) to obtain the base output map (302) corresponding to the first layer (310).

5. The method of one of claims 1 to 4, wherein the obtaining the delta output map (314) corresponding to the second layer (320) comprises:
quantizing the output map (313) corresponding to the second layer (320); and subtracting, from the base output map (302), the quantized output map corresponding to the second layer (320) to obtain the delta output map (314) corresponding to the second layer (320).

6. The method of one of claims 1 to 5, further comprising:
obtaining a base weight corresponding to the first layer (310) and the second layer (320) based on a base model corresponding to the first neural network and the second neural network;
obtaining a first delta weight corresponding to the first layer (310) and a second delta weight corresponding to the second layer (320);
restoring the first layer (310) based on the base weight and the first delta weight; and
restoring the second layer (320) based on the base weight and the second delta weight.

7. The method of one of claims 1 to 6, wherein the first neural network and the second neural network comprise a sequence of a plurality of layers performing a series of operations on input data, and
the first neural network and the second neural network are different in at least a portion of the layers.

8. A non-transitory computer-readable storage medium storing instructions that, when executed by a processor, cause the processor to perform the method of one of claims 1 to 7.

9. An apparatus for simultaneously processing multiple computer vision tasks based on respective output maps (302, 313) of layers in a first neural network and a second neural network to which the same input image (202) is applied, the apparatus comprising:
at least one processor; and
at least one memory including instructions executable by the processor to perform the method according to one of claims 1 to 7.

## Patentansprüche

1. Verfahren zum gleichzeitigen Verarbeiten mehrerer Computer-Vision-Aufgaben auf Grundlage jeweiliger Ausgabekarten (302, 313) von Schichten in einem ersten neuronalen Netzwerk und einem zweiten neuronalen Netzwerk, auf die ein gleiches Eingangsbild (202) angewendet wird, wobei das Verfahren durch mindestens einen Prozessor ausgeführt wird, wobei das Verfahren umfasst:
Speichern einer Basis-Eingabekarte (301), die einer ersten Schicht (310) des ersten neuronalen Netzwerks entspricht, wobei die Basis-Eingabekarte (301) eine Basis-Ausgabekarte (302) ist, die einer ersten vorhergehenden Schicht der ersten Schicht (310) entspricht, und wobei, wenn die erste Schicht eine Anfangsschicht des ersten neuronalen Netzwerks ist, die der ersten Schicht entsprechende Basis-Eingabekarte (301) dem Eingangsbild (202) entspricht;
Speichern einer Delta-Eingabekarte (311), die einer zweiten Schicht (320) des zweiten neuronalen Netzwerks entspricht, wobei die Delta-Eingabekarte (311) eine Delta-Ausgabekarte (314) ist, die einer zweiten vorhergehenden Schicht der zweiten Schicht (320) entspricht und auf Grundlage einer Differenz zwischen der Basis-Ausgabekarte (302), die einer ersten vorhergehenden Schicht entspricht, und einer Ausgabekarte (313), die der zweiten vorhergehenden Schicht entspricht, erhalten wird;
Erhalten (110) einer Basis-Ausgabekarte (302), die der ersten Schicht (310) des ersten neuronalen Netzwerks entspricht, durch Anwenden der der ersten Schicht (310) entsprechenden Basis-Eingabekarte (301) auf die erste Schicht (310);
Wiederherstellen (120) einer Eingabekarte (312), die der zweiten Schicht (320) des zweiten neuronalen Netzwerks entspricht, durch Addieren der der zweiten Schicht (320) entsprechenden Delta-Eingabekarte (311) und der der ersten Schicht (310) entsprechenden Basis-Eingabekarte (301), wobei, wenn die zweite Schicht die Anfangsschicht des zweiten neuronalen Netzwerks ist, das Eingangsbild (202) als die der zweiten Schicht (320) entsprechende Eingabekarte (312) verwendet wird;
Erhalten (130) einer der zweiten Schicht (320) entsprechenden Ausgabekarte (313) durch Anwenden der der zweiten Schicht (320) entsprechenden Eingabekarte (312) auf die zweite Schicht (320);
Erhalten (140) einer der zweiten Schicht (320) entsprechenden Delta-Ausgabekarte (314) auf Grundlage einer Differenz zwischen der der ersten Schicht (310) entsprechenden Basis-Ausgabekarte (302) und der der zweiten Schicht (320) entsprechenden Ausgabekarte (313);
Komprimieren der der zweiten Schicht (320) entsprechenden Delta-Ausgabekarte (314) durch Darstellen der der zweiten Schicht (320) entsprechenden Delta-Ausgabekarte (314) als Metadaten, die Positionen und Werte von Elementen ungleich null umfassen; und
Komprimieren und Speichern (150) der Basis-Ausgabekarte (302) als eine Basis-Eingabekarte (301), die einer nachfolgenden Schicht der ersten Schicht (310) entspricht, und Speichern der komprimierten Delta-Ausgabekarte als eine Delta-Eingabekarte (311), die einer nachfolgenden Schicht der zweiten Schicht (320) entspricht.

2. Verfahren nach Anspruch 1, wobei das erste neuronale Netzwerk durch Feinabstimmen eines vortrainierten Basismodells auf Grundlage von Transferlernen für eine erste Aufgabe erhalten wird, und
das zweite neuronale Netzwerk durch Feinabstimmen des Basismodells auf Grundlage von Transferlernen für eine zweite Aufgabe erhalten wird.

3. Verfahren nach einem der Ansprüche 1 oder 2, wobei die erste Schicht (310) einer Schicht eines Basismodells entspricht, und
die zweite Schicht (320) derselben Schicht des Basismodells wie die erste Schicht (310) entspricht.

4. Verfahren nach einem der Ansprüche 1 bis 3, wobei das Erhalten der der ersten Schicht (310) entsprechenden Basis-Ausgabekarte (302) umfasst:
Erhalten einer der ersten Schicht (310) entsprechenden Ausgabekarte durch Anwenden der Basis-Eingabekarte (301) auf die erste Schicht (310); und
Quantisieren der der ersten Schicht (310) entsprechenden Ausgabekarte, um die der ersten Schicht (310) entsprechende Basis-Ausgabekarte (302) zu erhalten.

5. Verfahren nach einem der Ansprüche 1 bis 4, wobei das Erhalten der der zweiten Schicht (320) entsprechenden Delta-Ausgabekarte (314) umfasst:
Quantisieren der der zweiten Schicht (320) entsprechenden Ausgabekarte (313); und
Subtrahieren der der zweiten Schicht (320) entsprechenden quantisierten Ausgabekarte von der Basis-Ausgabekarte (302), um die der zweiten Schicht (320) entsprechende Delta-Ausgabekarte (314) zu erhalten.

6. Verfahren nach einem der Ansprüche 1 bis 5, ferner umfassend:
Erhalten eines Basisgewichts, das der ersten Schicht (310) und der zweiten Schicht (320) entspricht, auf Grundlage eines Basismodells, das dem ersten neuronalen Netzwerk und dem zweiten neuronalen Netzwerk entspricht;
Erhalten eines ersten Delta-Gewichts, das der ersten Schicht (310) entspricht, und eines zweiten Delta-Gewichts, das der zweiten Schicht (320) entspricht;
Wiederherstellen der ersten Schicht (310) auf Grundlage des Basisgewichts und des ersten Delta-Gewichts; und
Wiederherstellen der zweiten Schicht (320) auf Grundlage des Basisgewichts und des zweiten Delta-Gewichts.

7. Verfahren nach einem der Ansprüche 1 bis 6, wobei das erste neuronale Netzwerk und das zweite neuronale Netzwerk eine Sequenz einer Mehrzahl von Schichten umfassen, die eine Reihe von Operationen an Eingabedaten ausführen, und
das erste neuronale Netzwerk und das zweite neuronale Netzwerk sich in mindestens einem Teil der Schichten unterscheiden.

8. Nicht-transitorisches computerlesbares Speichermedium, das Anweisungen speichert, die, wenn sie von einem Prozessor ausgeführt werden, den Prozessor veranlassen, das Verfahren nach einem der Ansprüche 1 bis 7 auszuführen.

9. Vorrichtung zum gleichzeitigen Verarbeiten mehrerer Computer-Vision-Aufgaben auf Grundlage jeweiliger Ausgabekarten (302, 313) von Schichten in einem ersten neuronalen Netzwerk und einem zweiten neuronalen Netzwerk, auf die dasselbe Eingangsbild (202) angewendet wird, wobei die Vorrichtung umfasst:
mindestens einen Prozessor; und
mindestens einen Speicher, der durch den Prozessor ausführbare Anweisungen umfasst, um das Verfahren nach einem der Ansprüche 1 bis 7 auszuführen.

## Revendications

1. Procédé de traitement simultané de plusieurs tâches de vision par ordinateur sur la base de cartes de sortie respectives (302, 313) de couches dans un premier réseau neuronal et un deuxième réseau neuronal auxquels une même image d'entrée (202) est appliquée, le procédé étant exécuté par au moins un processeur, le procédé comprenant :
le stockage d'une carte d'entrée de base (301) correspondant à une première couche (310) du premier réseau neuronal, dans lequel la carte d'entrée de base (301) est une carte de sortie de base (302) correspondant à une première couche précédente de la première couche (310), et dans lequel, lorsque la première couche est une couche initiale du premier réseau neuronal, la carte d'entrée de base (301) correspondant à la première couche correspond à l'image d'entrée (202) ;
le stockage d'une carte d'entrée delta (311) correspondant à une deuxième couche (320) du deuxième réseau neuronal, dans lequel la carte d'entrée delta (311) est une carte de sortie delta (314) correspondant à une deuxième couche précédente de la deuxième couche (320), obtenue sur la base d'une différence entre la carte de sortie de base (302) correspondant à une première couche précédente et une carte de sortie (313) correspondant à la deuxième couche précédente ;
l'obtention (110) d'une carte de sortie de base (302) correspondant à la première couche (310) du premier réseau neuronal en appliquant, à la première couche (310), la carte d'entrée de base (301) correspondant à la première couche (310) ;
la restauration (120) d'une carte d'entrée (312) correspondant à la deuxième couche (320) du deuxième réseau neuronal en additionnant la carte d'entrée delta (311) correspondant à la deuxième couche (320) et la carte d'entrée de base (301) correspondant à la première couche (310), dans lequel, lorsque la deuxième couche est la couche initiale du deuxième réseau neuronal, l'image d'entrée (202) est utilisée comme carte d'entrée (312) correspondant à la deuxième couche (320) ;
l'obtention (130) d'une carte de sortie (313) correspondant à la deuxième couche (320) en appliquant, à la deuxième couche (320), la carte d'entrée (312) correspondant à la deuxième couche (320) ;
l'obtention (140) d'une carte de sortie delta (314) correspondant à la deuxième couche (320) sur la base d'une différence entre la carte de sortie de base (302) correspondant à la première couche (310) et la carte de sortie (313) correspondant à la deuxième couche (320) ;
la compression de la carte de sortie delta (314) correspondant à la deuxième couche (320) en représentant la carte de sortie delta (314) correspondant à la deuxième couche (320) sous forme de métadonnées comprenant des positions et des valeurs d'éléments non nuls ; et
la compression et le stockage (150) de la carte de sortie de base (302) en tant que carte d'entrée de base (301) correspondant à une couche ultérieure de la première couche (310), et le stockage de la carte de sortie delta compressée en tant que carte d'entrée delta (311) correspondant à une couche ultérieure de la deuxième couche (320).

2. Procédé selon la revendication 1, dans lequel le premier réseau neuronal est obtenu par ajustement fin d'un modèle de base préentraîné sur la base d'un apprentissage par transfert pour une première tâche, et
le deuxième réseau neuronal est obtenu par ajustement fin du modèle de base sur la base d'un apprentissage par transfert pour une deuxième tâche.

3. Procédé selon l'une des revendications 1 ou 2, dans lequel la première couche (310) correspond à une couche d'un modèle de base, et
la deuxième couche (320) correspond à la même couche du modèle de base que la première couche (310).

4. Procédé selon l'une des revendications 1 à 3, dans lequel l'obtention de la carte de sortie de base (302) correspondant à la première couche (310) comprend :
l'obtention d'une carte de sortie correspondant à la première couche (310) en appliquant la carte d'entrée de base (301) à la première couche (310) ; et
la quantification de la carte de sortie correspondant à la première couche (310) afin d'obtenir la carte de sortie de base (302) correspondant à la première couche (310).

5. Procédé selon l'une des revendications 1 à 4, dans lequel l'obtention de la carte de sortie delta (314) correspondant à la deuxième couche (320) comprend :
la quantification de la carte de sortie (313) correspondant à la deuxième couche (320) ; et
la soustraction, de la carte de sortie de base (302), de la carte de sortie quantifiée correspondant à la deuxième couche (320) afin d'obtenir la carte de sortie delta (314) correspondant à la deuxième couche (320).

6. Procédé selon l'une des revendications 1 à 5, comprenant en outre :
l'obtention d'un poids de base correspondant à la première couche (310) et à la deuxième couche (320) sur la base d'un modèle de base correspondant au premier réseau neuronal et au deuxième réseau neuronal ;
l'obtention d'un premier poids delta correspondant à la première couche (310) et d'un deuxième poids delta correspondant à la deuxième couche (320) ;
la restauration de la première couche (310) sur la base du poids de base et du premier poids delta ; et
la restauration de la deuxième couche (320) sur la base du poids de base et du deuxième poids delta.

7. Procédé selon l'une des revendications 1 à 6, dans lequel le premier réseau neuronal et le deuxième réseau neuronal comprennent une séquence d'une pluralité de couches effectuant une série d'opérations sur des données d'entrée, et
le premier réseau neuronal et le deuxième réseau neuronal sont différents dans au moins une partie des couches.

8. Support de stockage non transitoire lisible par ordinateur stockant des instructions qui, lorsqu'elles sont exécutées par un processeur, amènent le processeur à exécuter le procédé selon l'une des revendications 1 à 7.

9. Appareil de traitement simultané de plusieurs tâches de vision par ordinateur sur la base de cartes de sortie respectives (302, 313) de couches dans un premier réseau neuronal et un deuxième réseau neuronal auxquels la même image d'entrée (202) est appliquée, l'appareil comprenant :
au moins un processeur ; et
au moins une mémoire comprenant des instructions exécutables par le processeur pour exécuter le procédé selon l'une des revendications 1 à 7.
